# NOUVEAU FASCICULE DE BREVET EUROPEEN

(11) **EP 0 655 990 B2**
(45) Date de publication et mention de la décision concernant l'opposition: **18.10.2000**
(45) Mention de la délivrance du brevet: 13.11.1996
(21) Numéro de dépôt: 93919388.4
(22) Date de dépôt: 16.08.1993
(51) Int. Cl.: C04B 11/028, F27B 7/20, F27B 7/24

(54) **PROCEDE DE CUISSON DU GYPSE ET FOUR POUR SA MISE EN OEUVRE**
VERFAHREN ZUM BRENNEN VON GIPS UND OFEN ZUR DURCHFUEHRUNG DIESES VERFAHRENS
PROCESS FOR BAKING GYPSUM AND OVEN FOR CARRYING OUT SAID PROCESS

(30) Priorité: 18.08.1992 FR 9210209
(43) Date de publication de la demande: 07.06.1995
(73) Titulaire: M 2 G S.A., 44805 Saint-Herblain Cedex (FR)
(72) Inventeur: MACE, Patrick, F-44800 Saint-Herblain (FR)
(86) Numéro de dépôt international: FR9300814
(87) Numéro de publication internationale: WO9404472

(56) Documents cités:
- DE-A- 1 940 007
- DE-A- 2 424 519
- DE-A- 3 320 767
- DE-A- 3 502 637
- DE-C- 937 276
- DE-U- 8 714 654
- FR-A- 889 935
- FR-A- 1 170 882
- FR-A- 1 212 037
- CHEMICAL ABSTRACTS, vol. 99, no. 24, 12 Décembre 1983, Columbus, Ohio, US; abstract no. 197425r, & JP,A,58 115 048 (NIHON CEMENT CO.) 8 Juillet 1983
- ZEMENT, KALK, GIPS. vol. 45, no. 9 , Septembre 1992 , WIESBADEN DE pages 467 - 473 S.STENSTRÖM ET AL. 'Gipscalcination in überhitzter Dampfatmosphäre - ein neues Verfahren mit verringertem Energieaufwand und verbesserter Produktqualität'
- Zement-Kark-Gips, 9. Jahrgang, Juli 1956, Seiten 319-328
- Ullmans, 4. Auflage, Band 12, 1976, Seiten 297-314
- Prospekt der BSH-Büttner-Schilde-Haas AG "Drehtrommeln, 1976

## Description

La présente invention concerne la fabrication du plâtre et en particulier un procédé de cuisson du gypse et le four pour la mise en oeuvre de ce procédé.

D'une manière générale, la fabrication du plâtre repose sur une déshydratation plus ou moins complète du gypse sous l'action de la chaleur, dans une enceinte ouverte ou fermée.

Les différentes catégories de plâtre résultent des conditions de cette cuisson puisqu'en effet le traitement peut s'effectuer sur une plage de températures importantes, la température maximale peut atteindre plusieurs centaines de degrés, et sous des pressions diverses allant par exemple de la pression atmosphérique à 10 bars.

Il existe donc une multitude de procédés et de matériels pour fabriquer le plâtre. Les caractéristiques de ce dernier sont directement liées aux techniques utilisées. Selon la méthode de cuisson, on obtiendra soit des plâtres courants pour la construction, soit des plâtres spéciaux pour des moulages, prothèses dentaires, céramique, plâtres industriels etc...

Selon l'invention, le procédé de préparation du plâtre consiste à effectuer une cuisson du gypse sous une pression de vapeur surchauffée, dans un four cylindrique horizontal rotatif muni de moyens de chauffage indirect, de moyens permettant un brassage continu de la charge et de moyens qui permettent d'ajuster au cours du traitement et de façon indépendante, la température et la pression dans l'enceinte de four en fonction de la température de la charge, de la température ambiante dans l'enceinte, de la pression dans l'enceinte et de l'évolution de la masse de la charge pendant la cuisson.

Ce procédé permet l'obtention de plâtre de type semihydrate béta de haute qualité, avec des productivités équivalentes à celles qui correspondent à la fabrication des plâtres plus courants.

De plus le procédé permet, en agissant sur les paramètres de fonctionnement, d'obtenir tous types de plâtres désirés, et en particulier un mélange de semihydrate béta et d'anhydrite II particulièrement intéressant pour certains types de produits finis.

Le procédé permet, en moins d'une heure, de produire 6 à 14 tonnes de plâtre, d'en réaliser la cuisson et le séchage.

Pour la mise en oeuvre de ce procédé, l'invention propose un four comprenant une cuve horizontale tournante munie de couronnes circulaires à ses extrémités qui reposent et sont guidées sur des galets support ; ce four comporte :
- des moyens de brassage qui diffusent la chaleur à la charge ;
- des moyens d'obturation des extrémités du four ;
- des moyens de pesage de la charge, pendant le traitement dans le four ;
- des moyens de contrôle des températures de l'ambiance et du produit et des moyens de contrôle de la pression dans l'enceinte ;
- des moyens pour règler la température du produit et pour règler la pression.

Le procédé et le four selon l'invention permettent de produire pratiquement toutes catégories de plâtre et en particulier un plâtre du type semihydrate béta de haute qualité grâce à une optimisation des conditions de température et de pression. Le traitement s'effectue en vapeur surchauffée, à des températures supérieures à la température de vapeur saturante ; cette particularité permet de règler indépendamment la pression et la température règnant dans l'enceinte. Ce règlage des deux paramètres pression et température s'effectue en fonction du type de produit que l'on désire obtenir.

Dans l'enceinte, l'eau existe uniquement sous la forme vapeur et sous la forme d'eau de cristallisation, partie intégrante du gypse.

Ce procédé de traitement, par l'ajustement de la température et de la pression permet d'obtenir en plus du semihydrate béta, d'autres catégories de plâtres comme par exemple l'anhydrite II ; le mélange de ces différentes catégories est obtenu directement par le procédé. Ainsi on peut choisir, en fonction des caractéristiques souhaitées, un plâtre qui par exemple augmente ou réduit le temps de prise, la résistance à la flexion et à la pression par exemple.

Selon l'invention, les moyens de brassage du produit à l'intérieur du four sont constitués de spires hélicoïdales qui s'étendent entre l'entrée et la sortie, sur la paroi interne et comprennent, principalement dans la partie centrale cylindrique, des palettes positionnées entre les spires, de façon à former, avec ces dernières, une sorte de pelle ou godet qui, selon le sens de rotation du four, sera actif pour effectuer le brassage, ou inactif de façon à permettre la vidange.

Ces godets ou pelles, permettent un brassage continu pendant la cuisson. Ces godets jouent un rôle important dans la cuisson par convection des calories de la paroi jusqu'au coeur du produit à traiter ; ils augmentent la surface d'échange thermique.

Cet aménagement du four permet d'obtenir des gradients thermiques très importants qui accélèrent le processus de traitement du gypse et permettent des cadences très rapides. Il permet également d'obtenir une température homogène dans le produit. De plus le séchage du plâtre s'effectue pendant la transformation du gypse.

Selon une autre disposition de l'invention, les moyens d'obturation sont constitués, à la sortie du four, d'une boîte fixe, étanche, montée sur l'extrémité par l'intermédiaire d'un joint tournant, laquelle boîte comporte un orifice de sortie muni d'un obturateur pour permettre l'évacuation du produit.

Selon une autre disposition de l'invention, la boîte comporte des moyens de fixation et de règlage d'une canne pyrométrique qui plonge à l'intérieur du four, dans le produit à traiter.

Toujours selon l'invention, la boîte est constituée d'une double paroi : une paroi interne cylindrique comportant à l'une de ses extrémités le joint tournant et, à l'autre extrémité, un chapeau, et une paroi externe en forme d'enveloppe cylindrique solidaire, de façon étanche, de la paroi interne, par l'intermédiaire d'un système de compensation élastique interposé entre les deux.

Selon une autre disposition de l'invention, la paroi externe comporte à sa partie inférieure, une jupe cylindrique qui s'étend vers le bas, formant un siège pour un clapet conique pointé vers le haut, lequel clapet est actionné au moyen d'un vérin ancré sur la partie supérieure de ladite enveloppe externe de la boîte.

Toujours selon l'invention, le compensateur est constitué de deux tores à section en U, disposés aux extrémités de l'enveloppe cylindrique externe, entre cette dernière et la paroi cylindrique interne de la boîte.

Toujours selon l'invention, le chapeau de la paroi interne de la boîte, comporte, en plus des moyens de fixation de la canne pyrométrique, au moins un orifice obturé par une vanne pour l'échappement des buées et vapeurs, et des orifices d'implantation des capteurs de température et de pression.

Selon une autre disposition de l'invention, les moyens de pesage sont constitués de capteurs disposés entre les supports des galets et le bâti général du four.

Selon une autre disposition de l'invention, l'entrée du four est obturée au moyen d'un opercule qui est escamotable sous l'effet d'un vérin pour dégager totalement ladite entrée du four lors du chargement, lequel opercule est ensuite plaqué de façon étanche sur l'entrée du four par tous moyens appropriés, durant toute la phase de traitement.

Le système d'obturation disposé à l'entrée du four, de même que le clapet disposé à la sortie du four, permettent le passage du produit à traiter ou traité, sans perte de temps grâce à des manoeuvres simples du matériel en cause.

La durée du cycle total de préparation du plâtre étant très courte, inférieure à une heure, les différents systèmes d'obturation du four ne doivent pas induire des opérations pénalisantes sur le plan de cette durée du cycle.

L'invention sera encore détaillée à l'aide de la description suivante et des dessins annexés, donnés à titre indicatif, et dans lesquels :

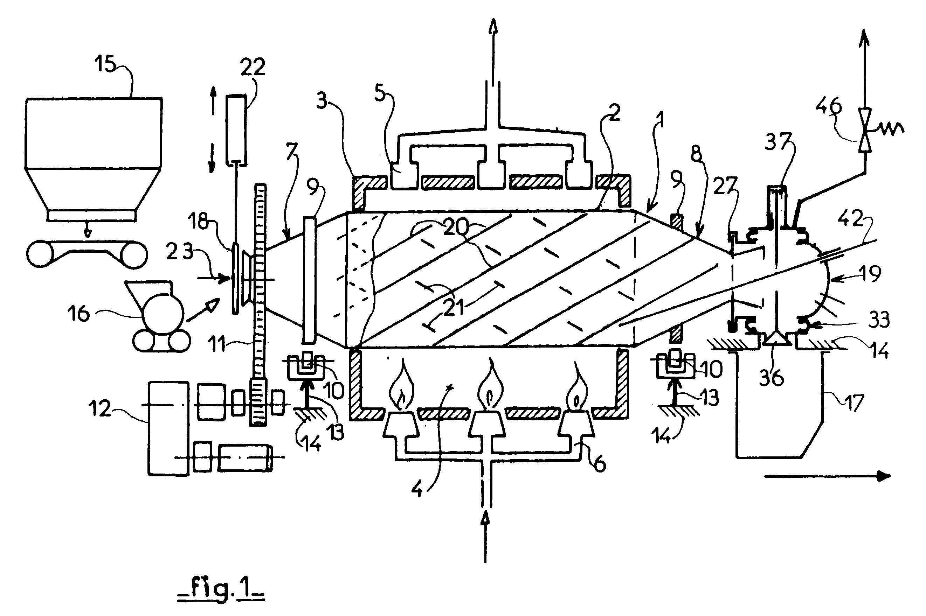

- la figure 1 montre, de façon schématique le four utilisé pour la mise en oeuvre du procédé de cuisson du gypse.
- la figure 2 illustre, de façon plus détaillée, schématiquement, la boîte étanche disposée à la sortie du four.

Ce four comprend une enceinte de cuisson 1 ou réacteur, en forme de cylindre 2 centré sur un axe horizontal. Ce cylindre 2 est enserré dans une fumisterie 3 qui comporte à sa partie inférieure, une chambre de combustion 4 et, à sa partie supérieure des carnaux d'évacuation 5.

La chambre de combustion 4 est équipée de 1 ou plusieurs brûleurs 6 ou autres sources de chaleur, qui fournissent les gaz chauds enveloppant l'enceinte de cuisson pour réaliser un chauffage indirect du gypse.

Les extrémités du cylindre sont tronconiques. On remarque l'entrée 7 et la sortie 8. Ces entrées et sorties comportent des couronnes circulaires 9 en appui sur des galets 10. Le cylindre est soutenu et guidé au moyen des galets 10 et couronnes 9 et il est, par ces moyens, centré par rapport à la fumisterie 3.

On remarque que l'entrée 7 comporte de plus, une couronne dentée 11 qui est entraînée par un ensemble moto-réducteur 12. Cet entraînement par couronne dentée permet d'obtenir une rotation plus régulière du four. Ce four effectue entre 3 à 4 tours/minute, avec une charge comprise entre 8 et 16 tonnes de gypse.

Compte tenu de la masse importante traitée dans le four et des vitesses de réaction, le contrôle du processus de traitement comprend un suivi de l'évolution de la masse du produit. Les galets 10 qui supportent le four tournant sont équipés d'un système de pesage, sous la forme de capteurs 13, de façon à suivre d'une manière continue l'évolution de la masse de gypse traitée, laquelle évolue tout au long du traitement du fait de la déshydratation et de l'évacuation de buées et vapeurs. Ces capteurs 13 sont insérés entre les supports des galets 10 et le bâti général 14 du four.

Le gypse est stocké dans une trémie 15, du coté de l'entrée 7 du four. Un lanceur 16 sert à alimenter le four au niveau de son entrée 7. La sortie du four est équipée d'une trémie de décharge 17 qui réceptionne le plâtre après traitement.

On remarque que l'entrée du four est obturée par un opercule 18 et que la sortie comporte une boîte étanche 19 ; ces deux éléments seront détaillés plus loin.

L'intérieur de l'enceinte de cuisson 1 est aménagée de façon à favoriser les échanges thermiques entre la paroi et le gypse qui constitue la charge. On remarque, schématisées sur la figure, des spires hélicoïdales 20 qui s'étendent de l'entrée à la sortie du four et, disposées principalement dans la partie cylindrique du four, des palettes 21 dont la position et l'inclinaison permettent, dans un sens de rotation, de jouer avec les spires un rôle de pelle pour brasser le produit, alors que dans l'autre sens de rotation, ces palettes sont inactives afin de permettre aux spires hélicoïdales, de réaliser la vidange du four.

Les spires 20 et palettes 21 assurent un brassage efficace et homogène du produit. Elles procurent également une augmentation de la surface de chauffe du produit en diffusant les calories. Les palettes disposées entre les spires sont de l'ordre d'une soixantaine pour un volume de produit de 7 m³ environ. Le nombre des palettes est variable selon le volume de produit à traiter. L'effort de pelletage est relativement important et nécessite un entraînement en rotation du four au moyen d'une couronne dentée. La rotation du four associée aux aménagements internes (spires et palettes), présente l'avantage de pouvoir travailler avec des températures importantes car chaque partie de la virole est régulièrement en contact avec le produit plus froid qui absorbe l'énergie pour se transformer.

Les spires et palettes internes permettent d'amener par convection, des calories au coeur du produit à traiter ; elles augmentent la surface d'échange thermique. Pour traiter efficacement le gypse sa granulométrie est inférieure à 10 millimètres, de préférence.

La phase de séchage du produit se déroule en même temps que la phase de transformation du gypse du fait du traitement en vapeur surchauffée.

Les extrémités 7 et 8 du four comportent des moyens d'obturation qui permettent de réaliser le traitement du gypse sous une pression contrôlée qui varie entre la pression atmosphérique et 10 bars par exemple, pour élaborer toutes les catégories de plâtre couramment utilisées.

Du côté de l'entrée 7, on remarque l'opercule 18, disposé en position active d'obturation sur le dessin. Cet opercule 18 se dégage totalement de l'orifice de l'entrée 7 sous l'effet d'un vérin 22 disposé à sa partie supérieure. Pour appliquer l'opercule contre l'extrémité de l'entrée 7, on a représenté une flêche 23, qui symbolise tous types d'appareillage susceptible de maintenir ledit opercule 18 contre l'entrée pendant la durée du traitement, et de le dégager en fin de cycle, pour introduire une nouvelle charge au moyen du lanceur 16.

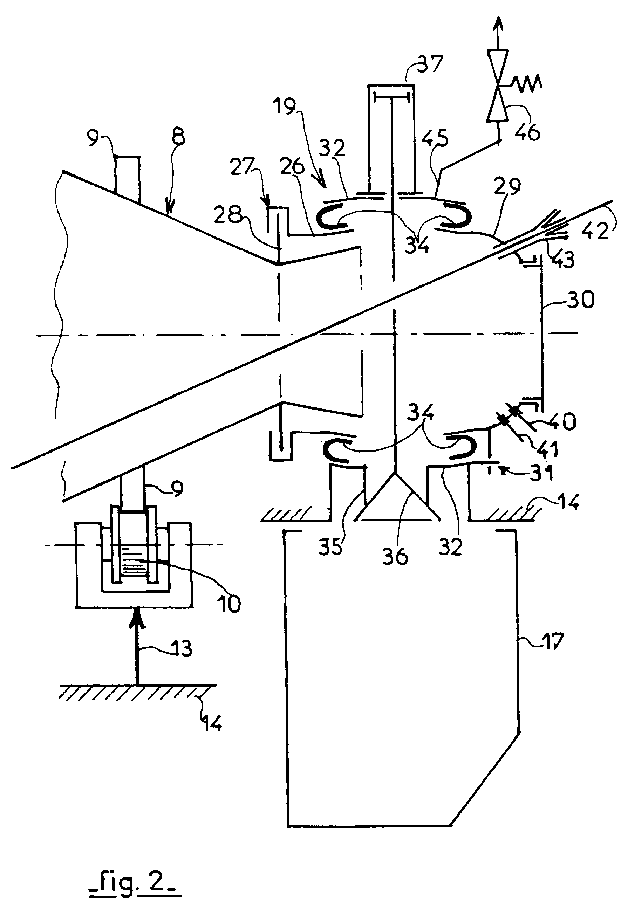

La sortie 8 du four comporte la boîte étanche 19 qui est soumise à la pression régnant dans le four. Cette boîte, représentée de façon détaillée figure 2, comporte une paroi cylindrique interne 26 dont une extrémité comporte un joint tournant 27 coopérant avec une couronne 28 disposée à l'extrémité du cône de sortie 8, et dont l'autre extrémité comporte un chapeau 29 notamment muni d'un trou d'homme 30. Cette paroi interne 26 est immobilisée en rotation au moyen d'un système de butée 31 associé à une paroi externe 32 en forme de virole cylindrique qui est solidaire du bâti général 14 du four. La liaison entre la paroi interne 26 et la virole 32 s'effectue au moyen d'un système de compensation 33 constitué de deux tores 34 disposés aux extrémités de la virole entre cette dernière et la paroi 26.

Ces tores 34 sont réalisés en un matériau du type élastomère composite souple et ont une section en forme de U. Ils assurent une étanchéité entre la paroi interne 26 et la virole 32 ; ils permettent de compenser les dilatations et les défauts d'alignement de la partie en rotation.

La virole externe 32 comporte à sa partie inférieure, une jupe cylindrique 35 qui s'étend au-dessus de la trémie 17. Cette jupe 35 sert de siège à un clapet 36 de forme conique, pointé vers le haut. Ce clapet 36 est manoeuvré au moyen d'un vérin 37 disposé au-dessus de l'enveloppe 32 et ancré sur cette dernière de façon étanche.

Ce clapet 36 fait également office de soupape de sureté notamment lors du traitement du gypse sous haute pression.

Le chapeau 29 de la paroi interne 26 de la boîte comporte des aménagements pour accueillir les différents capteurs de températures et de pression. On a shématisé un capteur 40 pour le relevé de la température ambiante à l'intérieur de l'enceinte et un capteur 41 pour relever la pression.

Ce chapeau 29 comporte également un aménagement particulier pour l'implantation d'une canne pyrométrique 42. Cette canne, d'une longueur de 4 à 5 mètres, pénètre dans le four, et en particulier dans l'enceinte cylindrique 2 pour relever la température au coeur du produit en cours de traitement.

Cette canne pyrométrique est fixée sur le chapeau 29 dans un aménagement 43 qui permet de règler son positonnement à l'intérieur du four.

On remarque encore, aménagé sur la virole externe 32 pour éviter la mise en place de compensateur sur la tuyauterie d'extraction des buées, un orifice 45 permettant l'échappement de la vapeur et des buées. Cet échappement des vapeurs et buées est contrôlé au moyen d'une vanne 46. De préférence on disposera 2 ou 3 orifices d'échappement des buées et vapeurs pour augmenter la souplesse d'utilisation du four.

Le suivi de l'évolution de la masse de la charge, par les capteurs 13, permet de suivre le degré d'avancement de la transformation du gypse.

L'ensemble des informations obtenues par les capteurs, aussi bien les capteurs de pesage que les capteurs de pression et de température ambiante ou au sein du produit, sont traitées par un ordinateur qui, en fonction du produit final souhaité, pourra gérer la température en agissant sur les rampes de chauffage 6, et la pression en agissant sur les vannes 46 qui permettent un échappement de la vapeur et des buées.

Ce contrôle automatique par informatique permet d'atteindre en toute sécurité, au coeur du produit, la température à laquelle à lieu le défournement et d'accéder au type de plâtre désiré.

On peut également prévoir une adjonction de vapeur exogène, produite dans un dispositif extérieur, pour accélérer le démarrage de la réaction du produit ou toute autre phase au cours du traitement.

Toujours pour réduire la durée du cycle de traitement, on peut aussi prévoir une réchauffe de la vapeur contenue dans l'enceinte de cuisson, au moyen d'un dispositif de chauffe externe.

Dans ce cas, l'introduction de vapeur s'effectue par la boîte 19 située à la sortie 8 du four. On peut également prévoir de remplacer l'opercule 18 disposé à l'entrée 7 par une boîte étanche du même type que la boîte 19 afin de placer une introduction de vapeur et/ou de positionner des organes de contrôles comme par exemple une seconde canne pyrométrique.

## Revendications

1. Procédé de cuisson du gypse dans un four cylindrique horizontal tournant muni de moyens pour effectuer un traitement sous pression de vapeur surchauffée, caractérisé en ce qu'il consiste : à introduire dans le four, une masse de gypse déterminée, à chauffer le gypse de façon indirecte, à brasser cette charge de façon continue et homogène et à ajuster au cours du traitement, et de façon indépendante, la température et la pression dans l'enceinte de four en fonction de la température de la charge, de la température ambiante dans l'enceinte, de la pression dans l'enceinte et de l'évolution de la masse de la charge pendant la cuisson, pour obtenir en moins d'une heure un plâtre de type semihydrate bêta de haute qualité, et tous types de plâtres désirés, en particulier un mélange de semihydrate et d'anhydrite II.

2. Four pour la mise en oeuvre du procédé selon la revendication 1, du type comprenant une cuve horizontale tournante dont la partie centrale cylindrique est chauffée par des gaz ou autres, lequel four est muni de couronnes portées par des galets supports, caractérisé en ce qu'il comporte:
- des moyens de brassage qui diffusent la chaleur à la charge ;
- des moyens d'obturation des extrémités du four ;
- des moyens de pesage de la charge pendant le traitement ;
- des moyens de contrôle des températures ambiantes du four et de la charge et des moyens de contrôle de la pression à l'intérieur du four ;
- des moyens pour régler la température et la pression on fonction de la catégorie de plâtre souhaité.

3. Four de cuisson du gypse, selon la revendication 2, caractérisé on ce que les moyens de brassage sont constitués de spires hélicoïdales (20) qui s'étendent entre l'entrée (7) et la sortie (8), sur la paroi interne du four et, principalement dans la partie centrale cylindrique (2), de palettes (21) positionnées entre les spires de façon à former avec ces dernières une sorte de pelle ou godet qui, selon le sens de rotation du four, sera actif pour effectuer le brassage de la charge, ou inactif de façon à permettre l'évacuation du produit à la fin du cycle de traitement,

4. Four de cuisson du gypse selon la revendication 2, caractérisé on ce que les moyens d'obturation sont constitués, à la sortie du four, d'une boîte étanche et fixe (19), montée, par l'intermédiaire d'un joint tournant (27), à la sortie du four, laquelle boîte comporte notamment : un orifice de sortie muni d'un obturateur permettant l'évacuation du produit à la fin du cycle de traitement.

5. Four de cuisson du gypse selon la revendication 4, caractérisé en ce que la boîte (19) comporte un support (43) permettant de guider et de régler une canne pyrométrique (42) qui plonge à l'intérieur du four, directement en contact avec la charge.

6. Four de cuisson du gypse selon la revendication 5, caractérisé en ce que la boîte (19) est constituée d'une double paroi:
- une paroi interne cylindrique (26) munie à l'une de ses extrémités, du joint tournant (27) et à son autre extrémité d'un chapeau (29) comportant notamment le support (43) de la canne pyrométrique ;
- une paroi externe fixe (32) en forme d'enveloppe cylindrique ou de virole, solidaire de la paroi interne (26) au moyen d'un système étanche élastique de compensation (33).

7. Four de cuisson du gypse selon la revendication 6, caractérisé en ce que la paroi externe (32) comporte, à sa partie inférieure, une jupe cylindrique (35) qui s'étend vers le bas, formant une sorte de siège pour un clapet (36) de forme conique pointé vers le haut, lequel clapet est actionné au moyen d'un vérin (37) disposé, de façon étanche, sur la paroi externe (32).

8. Four de cuisson du gypse selon la revendication 6, caractérisé on ce que le système compensateur (33) est constitué de deux tores (34) en matériau du type élastomère composite souple, dont la section est on forme de U, lesquels fores sont disposés aux extrémités de l'enveloppe cylindrique externe (32) entre cette dernière et la paroi cylindrique interne (26).

9. Four de cuisson du gypse selon la revendication 6, caractérisé on ce que la boîte (19) comporte au moins un orifice (45) permettant un échappement contrôlé par vanne (46), de la vapeur et des buées, et des orifices d'implantation des capteurs (40, 41) permettant de contrôler la température et la pression ambiante dans l'enceinte du four.

10. Four de cuisson du gypse, selon la revendication 2, caractérisé en ce que les moyens de pesage sont constitués de capteurs (13) disposés au niveau des galets supports (10).

11. Four de cuisson du gypse selon la revendication 2, caractérisé on ce que l'entrée (7) comporte un opercule (18) manoeuvré entre une position active d'obturation et une position inactive, au moyen d'un vérin (22), lequel opercule comporte des moyens (23) permettant de réaliser son application étanche sur l'extrémité de l'entrée (7).

## Claims

1. A process for baking gypsum in a rotating horizontal cylindrical oven, fitted with means to carry out an overheated steam pressure treatment, characterised in that consists in: introducing in the oven, a determined mass of gypsum, heating the gypsum indirectly, stirring this load in a continuous and homogeneous way and adjusting the following parameters during the process, and independently, the temperature and pressure in the enclosure of the oven according to the temperature of the load, the ambient temperature in the enclosure, the pressure in the enclosure and the evolution of the mass of the load during calcining, in order to obtain in less than one hour a high quality semihydrate betatype plaster as well as all types of plaster desired, especially a mixture of semihydrate and anhydrite II.

2. An oven for the implementation of the process according to claim 1, of the type comprising a rotating horizontal vessel whose cylindrical centre part is heated by gases or other means, which oven is fitted with crowns carried by supporting rollers, characterised in that it contains:
- stirring means which distribute the heat over the load;
- means for blanking off the ends of the oven;
- means for weighing the load during the treatment:
- means to control the surrounding temperatures of the oven and of the load as well as means to regulate the pressure inside the oven;
- means to adjust the temperature and the pressure according to the category of plaster requested.

3. A gypsum baking oven, according to claim 2, characterised in that the stirring means are made of helical spirals (20) stretching between the inlet (7) and the outlet (8), on the inside wall of the oven and, mainly in the cylindrical centre part (2), with blades (21) placed between the spirals in order to form with the latter a kind of shovel or bucket which, according to the rotation direction of the oven, will be actuated to perform the stirring motion of the load or de-actuated to enable the discharge of the product at the end of the treatment cycle.

4. A gypsum baking oven according to claim 2, characterised in that the blanking means are constituted, at the oven outlet, of a tight and fixed box (19) mounted via a rotary seal (27), at the outlet of the oven, which box exhibits especially: an outlet orifice fined with a plug enabling the discharge of the product at the end of the treatment cycle.

5. A gypsum baking oven according to claim 4, characterised in that the box (19) contains a support (43) enabling to guide and to adjust a pyrometric stick (42) plunging inside the oven, to be directly in contact with the load.

6. A gypsum baking oven according to claim 5, characterised in that the box (19) consists of a double wall :
- an inside cylindrical wall (26) fitted at one of its ends, with the rotary seal (27) and at its other end, with a cap (29) forming among others the support (43) of the pyrometric stick :
- a fixed outside wall (32) in the form of a cylindrical envelope or of a ferrule, connected rigidly to the inside wall (26) via a tight and spring-loaded compensation system (33).

7. A gypsum baking oven according to claim 6, characterised in that the outside wall (32) contains, at its lower section, a cylindrical skirting (35) stretching downwards, forming a kind of seat for a flap (36), conical in shape and pointed upwards, which flap is actuated by a jack (37) arranged, tightly, on the outside wall (32).

8. A gypsum baking oven according to claim 6, characterised in that the compensating system (33) is made of two cores (34) of a material such as a flexible composite elastomer, whose section is in the shape of a U, which cores are arranged at the ends of the outside cylindrical envelope (32) between the latter and the inside cylindrical wall (26).

9. A gypsum baking oven according to claim 6, characterised in that the box (19) contains at least one orifice (45) enabling the discharge of steam and mists to be controlled by a valve (46) and orifices for the positioning of sensors (40, 41) enabling to control the surrounding temperature and pressure within the oven.

10. A gypsum baking oven, according to claim 2, characterised in that the weighing means are made of sensors (13) arranged at the level of the supporting rollers (10).

11. A gypsum baking oven according to claim 2, characterised in that the inlet (7) comprises a protective cover (18) that can be switched between an active blanking position and a passive position, via a jack (22), which protective cover contains means (23) enabling to apply tightly the said protective cover onto the end of the inlet (7).

## Patentansprüche

1. Verfahren zum Brennen von Gips in einem sich drehenden, horizontalen, zylindrischen Ofen, der mit Mitteln zur Durchführung einer Behandlung unter Druck mit überhitztem Dampf versehen ist, dadurch gekennzeichnet, daß es besteht aus: dem Einführen einer fesgelegten Menge Gips in den Ofen, dem Erhitzen des Gipses auf indirekte Weise, dem Umrühren dieser Charge auf kontinuierliche und homogene Weise und dem Einstellen während der Behandlung, und der Temperatur und des Drucks im Inneren des Ofens auf unabhängige Weise entsprechend der Temperatur der charge, der Raumtemperatur im Inneren des Ofens, dem Druck im Inneren des Ofens und der Veränderung der Masse der charge während dem Brennen, um in weniger als einer Stunde einen gebrannten Gips vom Typ Halbhydrat Beta hoher Qualität und alle gewünschten Gipstypen, insbesondere eine Mischung aus Halbhydrat und Anhydrit II, zu erhalten.

2. Ofen zur Durchführung des Verfahrens nach Anspruch 1 des Typs, der ein sich drehendes, horizontales Gefäß umfaßt, dessen zylindrischer Mittelteil von Gas oder anderem beheizt wird, welcher Ofen mit von Trägerwalzen getragenen Kränzen versehen ist, dadurch gekennzeichnet, daß er aufweist:
- Rührmittel, die die Wärme in der Charge verteilen;
- Mittel zum Verschließen der Enden des Ofens;
- Mittel zum Wiegen der Charge während der Behandlung;
- Mittel zur Kontrolle der Umgebungstemperaturen des Ofens und der Charge und Mittel zur Kontrolle des Drucks im Inneren des Ofens;
- Mittel zum Regeln der Temperatur und des Drucks in Abhängigkeit von der Sorte des gewünschten gebrannten Gipses.

3. Ofen zum Brennen von Gips nach Anspruch 2, dadurch gekennzeichnet, daß die Rührmittel aus wendelförmigen Windungen (20), die sich zwischen dem Eingang (7) und dem Ausgang (8) an der Innenwand des Ofens erstrecken, und, im wesentlichen im zylindrischen Mittelteil (2), aus Schaufeln (21) bestehen, die zwischen den Windungen so angeordnet sind, daß sie mit diesen letzteren eine Art Baggerlöffel oder eimer bilden, die entsprechend der Drehrichtung des Ofens aktiv, um das Umrühren der Charge zu bewirken, oder inaktiv werden, so daß das Ausleeren des Produktes am Ende des Behandlungszyklus gestattet wird.

4. Ofen zum Brennen von Gips nach Anspruch 2, dadurch gekennzeichnet, daß die Mittel zum Verschließen am Ausgang des Ofens aus einer dichten und festen Kapsel (19) bestehen, die mittels einer Drehverbindung (27) am Ausgang des Ofens angebracht ist, welche Kapsel insbesondere aufweist: eine Ausgangsöffnung, die mit einem Verschluß versehen ist, der das Ausleeren des Produkts am Ende des Behandlungszyklus gestattet.

5. Ofen zum Brennen von Gips nach Anspruch 4, dadurch gekennzeichnet, daß die Kapsel (19) einen Halter (43) aufweist, der gestattet, einen Temperaturfühler (42) zu führen und einzustellen, der in das Innere des Ofens direkt in Kontakt mit der Charge eintaucht.

6. Ofen zum Brennen von Gips nach Anspruch 5, dadurch gekennzeichnet, daß die Kapsel (19) aus einer Doppelwand besteht:
- einer zylindrischen inneren Wand (26), die an einem ihrer Enden mit einer Drehverbindung (27) und an ihrem anderen Ende mit einem Aufsatz (29) versehen ist der insbesondere den Halter (43) des Temperaturfühlers aufweist;
- einer festen äußeren Wand (32) in Form eines Mantels oder Rings, die mit der inneren Wand (26) mittels eines elastischen, dichten Ausgleichssystems (33) fest verbunden ist.

7. Ofen zum Brennen von Gips nach Anspruch 6, dadurch gekennzeichnet, daß die äußere Wand (32) an ihrem unteren Teil eine zylindrische Schürze (35) aufweist, die sich nach unten erstreckt, die eine Art Sitz für eine Klappe (36) von konischer, nach oben zugespitzter Form bildet, welche Klappe mittels eines Zylinders (37) betätigt wird, der in dichter Weise an der äußeren Wand (32) angeordnet ist.

8. Ofen zum Brennen von Gips nach Anspruch 6, dadurch gekennzeichnet, daß das Ausgleichersystem (33) aus zwei Tori (34) aus einem Material vom Typ eines nachgiebigen Verbundelastomers besteht, deren Querschnitt U-förmig ist, welche Tori an den Enden des äußeren zylindrischen Mantels (32) zwischen diesem letzteren und der inneren zylindrischen Wand (26) angeordnet sind.

9. Ofen zum Brennen von Gips nach Anspruch 6, dadurch gekennzeichnet, daß die Kapsel (19) wenigstens eine Öffnung (45), die ein vom Ventil (46) kontrolliertes Ausströmen des Dampfes und der Schwaden gestattet, und Öffnungen zur Anbringung von Meßfühlern (40, 41) aufweist, die die Kontrolle der Temperatur und des Umgebungsdrucks im abgeschlossenen Raum des Ofens gestatten.

10. Ofen zum Brennen von Gips nach Anspruch 2, dadurch gekennzeichnet, daß die Mittel zum Wiegen aus Meßfühlern (13) bestehen, die in Höhe der Trägerrollen (10) angeordnet sind.

11. Ofen zum Brennen von Gips nach Anspruch 2, dadurch gekennzeichnet, daß der Eingang (7) einen Deckel (18) aufweist, der zwischen einer aktiven Verschlußposition und einer inaktiven Position mittels eines Zylinders (22) verschoben wird, welcher Deckel Mittel (23) aufweist, die die Ausführung seiner dichten Anlage an dem Ende des Eingangs (7) gestatten.
